# EUROPEAN PATENT SPECIFICATION

(11) **EP 4 043 631 B1**
(45) Date of publication and mention of the grant of the patent: **18.09.2024**
(21) Application number: 21156389.5
(22) Date of filing: 10.02.2021
(51) Int. Cl.: D06C 21/00, B29C 61/02

(54) **DEVICE AND METHOD FOR SHRINKING A FABRIC WEB AND SHRUNK FABRIC WEB**
VORRICHTUNG UND VERFAHREN ZUM SCHRUMPFEN EINER GEWEBEBAHN UND GESCHRUMPFTE GEWEBEBAHN
DISPOSITIF ET PROCÉDÉ DE RÉTRÉCISSEMENT D'UNE BANDE DE TISSU ET BANDE DE TISSU RÉTRÉCIE

(43) Date of publication of application: 17.08.2022
(73) Proprietor: Calik Denim Tekstil San. Ve Tic. A.S., 34169 Istanbul (TR)
(72) Inventor: Karaduman, Ahmet Serhat, 44900 Yesilyurt, Malatya (TR); Yildirim, Mustafa Yalçin, 44200 Battalgazi, Malatya (TR); Büyükikiz, Tarik, 44900 Yesilyurt, Malatya (TR)
(74) Representative: Schmid, Nils T.F.

(56) References cited:
- WO-A1-2009/038321
- DE-C- 599 577
- DE-C- 943 047
- GB-A- 1 273 311
- US-A- 4 176 531
- US-A- 5 791 029

## Description

The invention relates to devices and methods for shrinking, in particular compressive shrinking, a fabric web, in particular a denim web, and to a fabric web being shrunk with such device and/or method. The invention also relates to a method for maintaining such device.

Compressive shrinking is a process in particular for stretching, shrinking and fixing fabric webs, such as woven fabric webs, in particular denim fabric webs, in particular in length and/or width direction for reducing the shrinkage which would otherwise occur during fabric manufacturing processes, such as cutting, ironing, sewing and especially during wearing and washing of clothes made from such fabric web. Compressive shrinking devices particularly comprise a heat drum and a belt being urged against the heat drum. Thereby, the belt becomes compressed and laterally expanded and afterwards relaxes in particular to its original thickness. The fabric web to be treated is in particular transported between the belt and the heat drum so that it is forced to follow the compression, lateral expansion and subsequent relaxation of the belt. Thereby, the fabric web becomes shrunk.

The belt is usually made from rubber. During operation, the belt is heated by the heat drum which can lead to plasticizers in the belt migrating out so that the belt becomes brittle. To slow down or avoid this and to increase the lifetime of the belt, it is known to cool the belt with spray devices subjecting the belt with water or air. US 7,171,732 B2 describes that edge portions of the belt being not covered by the fabric web are heated up more than the central portion so that the edge portions need more cooling than the central portion. According to US 7,171,732 B2, this problem cannot be solved by simply increasing the cooling of the entire belt because this would lead to the central portion being cooled too much to ensure proper shrinkage of the fabric web. Therefore, US 7,171,732 B2 suggests using a cooling system with multiple spray devices for subjecting the edge portions with more cooling water and/or air than the central portion. Further, US 7,171,732 B2 suggests recirculating water according to the counter-current principle. Thereby, fresh cooling water is first used to cool a section of the belt. The cooling water being heated in this first step is then used for cooling another, less warm region of the blet. Thereby, the contact time of the cooling water on the belt can be increased.

However, it has been found that this cooling system is cost and maintenance-intensive due to the complexity of the cooling system. Further, it has been found that this cooling system leads to large water consumption since the water runs off quickly from the edge portions and therefore provides only a short contact time for cooling the belt which must be compensated by subjecting more water to the belt. The proposed counter-current principle of cooling water increases the contact time with the belt to a certain extent. However, the implementation of such counter-current principle has been found to be cost and maintenance intensive. Further, the inventors of the present invention have identified a need to further increase the contact time of the cooling water with the belt for further decreasing water consumption. In addition, it has been found that only a part of the cooling water is used for cooling the belt since the remaining part is either sprayed directly into the environment or deflected from the belt shortly after contacting the same.

These drawbacks of known cooling systems for compressive shrinking devices either lead to increased water consumption or to an unsatisfying cooling result.

WO2009/038321 A1 and US 5,791,029 A disclose a device for shrinking a fabric web, comprising a conveyor belt and a basin storing liquid draining off the conveyor belt.

It is therefore an object of the invention to overcome the above drawbacks of the prior art, in particular to provide a device for shrinking, in particular compressive shrinking, a fabric web with reduced water consumption by keeping, preferably increasing, the cooling effect and/or by keeping, preferably decreasing, efforts for maintenance of the device.

This object is solved by the independent claims.

One aspect of the invention relates to a device for shrinking, in particular compressive shrinking, a fabric web, in particular a denim web. The device comprises a belt, in particular a rubber belt, for conveying the fabric web through the device. The device further comprises a reservoir through which the belt is guided in that it immerses into a liquid in the reservoir.

In particular, the device is a shrinking device. In particular, the device is a compressive shrinking device. In particular, the device is a sanforizing device. In particular, the device is suitable for compressive shrinking, in particular for sanforizing, the fabric web. In particular, the suitability for shrinking the fabric web is realized by a heat drum against which the belt is urged, in particular in that the fabric web is compressed, in particular in belt thickness direction, and/or stretched, in particular in belt running direction and/or belt width direction. In particular, the heat drum is a heated drum. In particular, the heat drum is heated by steam. In particular, the heat drum is heated from the inside by steam. In particular, the heat drum is a steam drum. In particular, the heat drum comprises a particularly cylindrical metal surface facing the belt. In particular, the metal surface of the heat drum is polished, in particular mirror polished. In particular, the heat drum is rotatably mounted. In particular, the heat drum is mounted by roller bearings.

In particular, urging the belt against the heat drum is realized by two pressure drums. In particular, one pressure drum is mounted in web running direction upwards of the heat drum and one pressure drum is mounted in web running direction downwards of the heat drum. In particular, the two pressure drums guide the belt at its inside. In particular, at least one, in particular both, of the two pressure drums is movable relative to the heat drum, in particular movably mountable relative to the heat drum, in particular in that the compression and/or stretch of the belt against the heat drum is controllable by the relative movement or position of at least one of the pressure drums relative to the heat drum. In particular, the device comprises at least one drive, in particular electric, pneumatic or hydraulic drive, being coupled with at least one of the two pressure drums in particular for causing the relative movement between the pressure drum and heat drum. In particular, at least one, in particular both, of the pressure drums are rotatably mounted about a pressure drum rotation axis. In particular, the device comprises at least one drive for rotating at least one, preferably both, of the pressure drums around a pressure drum rotation axis. In particular, at least one, preferably both, of the pressure drums is driven by a motor rotating the at least one pressure drum about its pressure drum rotation axis.

In particular, the belt has a closed structure, in particular is a loop. In particular, the belt can in an unmounted condition be shaped as a circle. In particular, the belt is a rubber belt. In particular, the belt is a natural rubber belt, in particular a Borracha belt. The belt particularly extends in the belt running direction which is the direction in which the fabric web is guided through the device. In particular, the belt extends in belt width direction extending orthogonally to the belt running direction and/or parallel to the fabric web width direction. In particular the belt width direction and/or the fabric web width direction is the direction in which the weft yarns of a woven fabric being conveyed through the device extend. In particular, the planar extension of the belt is defined by the belt width direction and the belt running direction. In particular, the belt extends in thickness direction which is the direction extending orthogonal to the belt running direction and the belt width direction.

In particular, the device is suitable for continuously shrinking the fabric web. In particular, the belt is suitable for continuously conveying the fabric web through the device. In particular, the device comprises at least one feed drum in particular mounted in the fabric web running direction upwards of the belt. In particular, the at least one feed drum is mounted in that the fabric web is guided from the feed drum to the device, in particular to the belt. Additionally, or alternatively, the device particularly comprises at least one exit drum being in particular mounted in the fabric web running direction downwards of the belt. In particular, the at least one exit drum is mounted in that the fabric web is guided from the belt over the exit drum out of the device. In particular, the at least one feed drum and/or exit drum enables continuously conveying the fabric web through the device.

In particular, the reservoir is capable to be filled with the liquid. In particular the device comprises the liquid being filled in the reservoir. In particular, the reservoir is capable of keeping a certain amount of liquid within the reservoir. For this purpose, the reservoir particularly confines a filling volume. The reservoir particularly comprises an exhaust valve which can be closed to keep the liquid within the reservoir and opened for draining liquid out of the reservoir. In particular, the reservoir is capable of being filled up to a predetermined filling level. In particular, the reservoir is filled in particular with the liquid at least up to the predetermined filling level. In particular, the belt is guided through the reservoir in that it immerses into the liquid in the reservoir by being guided from a position above the filling level below the filling level where the belt immerses the liquid in the reservoir. In particular, after being guided along an immersion section in which the belt immerses the liquid, the belt is guided to a position above the filling level where it leaves the liquid. In particular, immersing has to be understood in that the belt enters into a liquid being stored within the reservoir. In particular, alternatively to the term immersing, the term dunking, dipping or plunging can be used.

In particular, the reservoir extends in the belt width direction at least about the extension of the belt. In particular, the belt is guided in that it flows along its entire extension in the belt width direction into the liquid in the reservoir. In particular, the reservoir is filled with the liquid. In particular, the liquid is water. In particular, the heat drum is heated to a temperature between 100°C and 160°C, 110°C and 150°C, 120°C and 140°C or between 125°C and 135°C.

It has been found that the immersion of the belt into the liquid leads to a greater cooling effect than the commonly known application of the liquid by spray devices. This can be explained in that, upon immersing the belt into a liquid, the entire surface of the belt gets in contact with the liquid while the application of spraying devices only leads to a sectional wetting of the belt. In addition, immersing the belt into a liquid enables wetting both sides of the belt in one step with a very simple machinery arrangement. Contrary thereto, at least two spray devices would be needed for wetting both sides of the belt. Further, it has been found that the immersion of the belt into the liquid provides a larger cooling surface for the edge portions compared to the central portions because, in addition to the planar extension of the belt's inside and outside surfaces in belt running direction and belt width direction, the lateral edges of the belt extending in belt thickness direction and in belt running direction come in contact with the liquid. Therefore, the inventive concept of immersing the belt into the liquid also leads to an increased cooling of the edge portions compared to the central portions thereby heading the problem of edge portions of the belt, being not covered by the fabric web, being heated up more than the central portion. Additionally, the inventors have found that, contrary to known devices requiring a felt in order to keep the liquid on the outside of the belt, the inventive device does not require such felt in particular because the immersion of the belt already cools the outside of the belt enough so that it is not necessary to additionally keep liquid outside the reservoir on the belt for cooling the outside of the belt. Thereby, in particular the complexity of the device is decreased which decreases costs for the device and its maintenance.

In one embodiment, the belt is guided in that it immerses the liquid along an immersion section along which the belt is guided by an immersion drum particularly contacting the inside of the belt. In particular, the immersion drum at least partially protrudes into the reservoir, in particular in that the belt immerses along its entire thickness into the liquid.

In particular, the immersion drum is located in that it receives the belt from the pressure drum being mounted in the belt running direction downwards of the heat drum and/or in that it delivers the belt to the pressure drum being mounted in the belt running direction upwards of the heat drum. In particular, the immersion drum guides, in particular contacts, the belt at its inside. In particular, the belt is guided at its inside by the immersion drum and by the two pressure drums. In particular, the immersion drum is mounted in the gravitational direction below the pressure drums and/or the heat drum. In particular, the pressure drums and the immersion drums are positioned relative to each other in that the guiding path of the belt in belt running direction from the downwards mounted pressure drum to the immersion drum and from the immersion drum to the upwards mounted pressure drum has a V-like or U-like course. In particular, a guiding path along which the belt enters and leaves the liquid has a v-shaped or u-shaped course, the legs of which merge in the reservoir, in particular in the immersion section. In particular, downwards and/or upwards of the reservoir in the belt running direction, the belt is guided in that liquid adhering to the belt is driven by gravitation along the belt towards the reservoir.

In particular, the immersion drum is rotatable, in particular rotatably mounted, about an immersion drum rotation axis. In particular, the device comprises a drive, in particular an electric, pneumatic or hydraulic motor, driving the immersion drum about its rotational axis.

In particular, the immersion section is the section along which the belt immerses, i.e. is in contact, with the liquid within the reservoir. In particular, the immersion section comprises a ring segment section extending along 30° to 180°, in particular 45° to 150°, more particularly 60° to 120°, even more particularly between 75 and 105°, in particular along which the belt extends as ring segment within the liquid. In particular, downstream and/or upstream of the ring segment section, the belt extends in particular straight to the upwards or downwards pressure drum. In particular, the entire ring segment section is immersed within the liquid. Additionally, the immersion section can comprise a straight segment section merging upwards and/or downwards into the ring segment section. In particular, the straight segment section and the ring segment section can be guided in that they immerse into the liquid. In particular, the ring segment section and/or the straight segment section extend in particular in the gravitational direction below the particularly predetermined filling level of the reservoir. In particular, at least 50%, 60%, 70%, 80%, 90%, 95% or 100% of the ring segment section extends below the filling level, in particular the belt immerses along the ring segment section along its entire thickness into the liquid.

In particular, the immersion drum guides the belt around its inside. In particular, the immersion drum protrudes at least about 20%, 30%, 40% or 45% of its radial extension into the reservoir. In particular, the immersion drum protrudes at least up to the filling level, in particular partially below the filling level, into the reservoir.

In one embodiment, the device comprises a squeezing device, in particular two squeezing rollers, for squeezing out liquid adhering to the belt when leaving the reservoir. In particular, the squeezing device is located in the belt running direction upwards the reservoir and/or downwards of the heat drum and/or downwards of the pressure drum being mounted upwards of the heat drum in the belt running direction.

In one embodiment, the device comprises a spray device for additionally applying liquid to the belt outside of the reservoir, in particular wherein the spray is located in that liquid can be subjected to the belt at a heating section along which the belt contacts the heat drum. In particular, the spray device is mounted in that the belt inside is subjected to water, in particular while the belt outside contacts the heat drum. It has surprisingly been found that cooling the belt directly at the heat section, in particular at the opposite side of the side facing the heat drum, does not impair the shrinking process but does avoid that the belt is heated too much. Thereby, the inventors have surprisingly found that the lifetime of the belt can be increased without impairing the shrinking process. It has been found particularly advantageous to position the spray device in that the water is subjected to the belt in a region of the heating section in which the belt already passed at least 5%, 10%, 15%, 20%, 25% or 30% of the heating section in the belt running direction and/or in which the belt still has to pass at least 35%, 40%, 45%, 50%, 55%, 60% or 70% of the heating section in the belt running direction.

In particular, the belt contacting the heat drum has to be understood in that the belt contacts the heat drum when no fabric web is guided by the belt. While operating the device, it might be the case that only the edge portions or no portion of the belt contact the heat drum. It shall be clear that also such operating conditions shall be covered by the invention.

Another aspect of the invention, which can be combined with the previously described aspect of the invention and any of its embodiments, relates to a device for shrinking, in particular compressive shrinking, a fabric web, in particular a denim web. The device comprises a belt, in particular a rubber belt, for conveying the fabric web through the device and a reservoir for collecting a liquid being applied to the belt, wherein the reservoir is movably mounted.

The device according to this aspect of the invention can be designed as a device according to the previously described aspect of the invention, in particular without the need of guiding the belt in that it immerses into a liquid of the reservoir. In particular, the belt and/or the reservoir can be designed as previously described. In particular, the device can comprise a heat drum and/or pressure drum as previously described. In particular, the device can comprise an immersion roller as previously described. In an embodiment, in which the belt is not guided in that it immerses into a liquid in the reservoir, the immersion drum can alternatively be called tension drum. The tension drum particularly serves to stretch the belt between the tension drum and the pressure drums.

The suitability of the reservoir for collecting a liquid can in particular be realized in that the reservoir is located in the gravitational direction below the belt, in particular below the tension drum, in particular the immersion drum, in that liquid adhering to the belt is driven by gravitation towards the reservoir. Additionally, the term collecting can encompass storing the liquid in the reservoir in that the reservoir can be filled up to a predetermined filling level, in particular enabling the belt to immerse into the reservoir. However, as previously mentioned, in this aspect of the invention, it is not necessary that the belt immerses into the liquid. In other words, the reservoir being able to collect the liquid shall encompass embodiments in which the belt immerses into the reservoir but not necessarily require such immersion.

According to this aspect of the invention, the reservoir is movably mounted. In particular, the reservoir is movably mounted relative to a belt, the heat drum, the pressure drums and/or the immersion drum or tension drum.

The inventors have found that the presence of a reservoir is on the one hand important in order to reduce water consumption of the shrinking process but on the other hand makes other components of the device, in particular the belt, the pressure drums and/or the immersion drum or tension drum, difficult to access and thereby increases efforts for maintaining the device. In particular, the tension applied to the belt during operation of the device and the heat applied to the belt makes it necessary to maintain the belt, the pressure drums and/or the immersion drum or tension drum in regular intervals. In particular, the weight of these drums and of the belt does not make it only time-consuming but also tiring to remove these components.

The inventors have found that by movably mounting the reservoir, the accessibility of these components can greatly be increased, thereby significantly decreasing efforts for maintaining the device.

In one embodiment, the reservoir can be mounted in that it can be moved away from and towards the belt, in particular in that it can be moved from a working position for collecting the liquid away from the belt into a maintenance position. The inventors have found that such movability particularly solves two problems. Namely, thanks to the movability towards the belt, the reservoir can be positioned in that it properly collects liquid draining off the belt, while thanks to the movability away from the belt, it can be ensured that the reservoir does not impair the accessibility of the belt and the drums during maintenance. In particular, the working position is chosen in that liquid adhering to the belt is driven by gravitation towards the reservoir, in particular, along the previously described v-shaped guiding path of the belt upwards or downwards of the reservoir. In particular, the working position of the reservoir is chosen in that the belt immerses into the liquid in the reservoir. Thereby, in addition to the reduction of water consumption by collecting water draining off the belt within the reservoir, the water consumption can be reduced and/or the cooling effect can be increased compared to only using spray devices.

In particular, in the maintenance position, the belt does not immerse into the liquid. Thereby, the benefits of immersing the belt into the liquid so as to increase the cooling effect or to decrease water consumption by the same cooling effort can be combined with increased accessibility of the belt, the immersion drum and/or the pressure drums.

In one embodiment, the reservoir is movably mounted along a linear guidance. Additionally, or alternatively, the reservoir is movably mounted in the gravitational direction. In particular, the reservoir is mounted along a linear guidance and/or in the gravitational direction in that the reservoir can be moved from a working position above a base of the device into a maintenance position below the base.

In particular, the linear guidance can comprise at least one carrier rail arrangement. In particular, the linear guidance is realized by two carrier rail arrangements being mounted at opposing sides of the reservoir, in particular at opposing sides of the reservoir in the belt width direction. In particular, the linear guidance is oriented in that the reservoir is movable in the gravitational direction.

In particular, the reservoir is movably mounted in the gravitational direction in that the reservoir can be moved into a maintenance position below the base of the device. The base of the device is in particular the floor on which a person operating or maintaining the device can stand. In particular, the device comprises a chamber below the base in which the reservoir is located in the maintenance position. In particular, the reservoir extends in the maintenance position with its entire extension below the base, in particular inside the chamber. Thereby, the base of the device becomes entirely free of the reservoir, thereby increasing the accessibility of the belt, the pressure drums and/or the immersion drum or the tension drum. In particular, the reservoir comprises a basement particularly comprising at the top in the gravitational direction the base. The basement particularly comprises an opening in the base through which the reservoir can be moved into the chamber. In particular, the rails of the carrier rail arrangement providing the linear guidance are mounted in side walls of the chamber within the basement. In particular, the basement comprises a cover for closing the opening after the reservoir has been moved into the maintenance position within the chamber.

In one embodiment, the device comprises at least one drive, in particular at least one cylindrical drive, for moving the reservoir, in particular wherein the at least one drive and the reservoir are coupled with at least one lever, in particular wherein the at least one drive is coupled with at least one drive lever and the reservoir is coupled with at least one reservoir lever, in particular wherein the at least one drive lever and the at least one reservoir lever are coupled with each other by a rod.

In particular, the drive is coupled in that with the reservoir that the reservoir can be moved by the drive from the working position into the maintenance position and vice-versa. In particular, the at least one drive is mounted below the base of the device, in particular inside the chamber of the device. In particular, the at least one drive is mounted in that it remains in the working position and in the maintenance position within the chamber. In particular, the at least one drive comprises two cylindrical drives mounted at opposing sides of the reservoir in particular in the belt width direction. In particular, the previously described two carrier rail arrangements are positioned in between the reservoir and the two cylindrical drives. In particular, each of the cylindrical drives is mounted with a drive lever so as to transfer the linear movement of the drive into a rotational movement. In particular, therefore, the drive levers are coupled with a rod extending in particular in the belt width direction in particular along the entire extension of the reservoir in the belt width direction. In particular, the at least one, in particular two, reservoir lever is fixedly mounted on the rod so that rotating the rod in particular by the cylindrical drives and the at least one drive lever causes the reservoir levers to pivot about a rotation axis of the rod. In particular, the at least one reservoir lever is in sliding, in particular rolling, contact with the reservoir, in particular in that the pivoting of the reservoir lever partially causes the reservoir to move along the previously described linear guidance and partially to slide along the reservoir lever. In particular, the sliding, in particular rolling contact between the at least one reservoir lever and the reservoir can be realized by sliding means particularly having a circular cross-section, in particular wherein one side of the sliding means is embedded into an in particular half circular recess of the reservoir while the other side of the sliding means contacts the at least one reservoir lever.

In one embodiment, the device comprises a reconditioning device, in particular a cooling device, for the liquid and a liquid circuit for guiding the liquid from the reservoir through the reconditioning device in particular directly back to the reservoir and/or to a spray device for applying the liquid to the belt.

In particular, the reconditioning device is a heat exchanger, in particular a plate heat exchanger. In particular, the reconditioning device comprises a heat absorption line and a heat emission line. In particular, the heat emission line guides liquid from the reservoir through the reconditioning device. In particular, the heat absorption line guides a heat absorption liquid through the device. In particular, the heat absorption liquid has a lower temperature compared to the liquid being guided from the reservoir through the heat emission line so that the liquid from the reservoir is cooled by the heat absorption liquid.

In particular, the heat emission line is part of the liquid circuit. In particular, the liquid circuit comprises a reconditioning line for guiding the liquid from the reservoir to the reconditioning device, in particular to the heat emission line. Additionally, or alternatively, the liquid circuit comprises a feedback line for guiding the reconditioned liquid from the reconditioning device, in particular from the heat emission line, back to the reservoir, in particular directly back to the reservoir, and/or to the spray device.

Directly guiding the liquid from the reconditioning device back to the reservoir has in particular to be understood in that the feedback line is coupled to a feedback opening of the reservoir, in particular in a side wall of the reservoir, in that the reconditioned liquid enters the reservoir before contacting the fabric web. The inventors have found that this particularly enables to properly set the temperature in the reservoir. Additionally, compared to subjecting the reconditioned liquid directly to the belt, for instance by a spray device, losses of liquid can be reduced, in particular because subjecting the liquid by a spray device to the belt causes parts of the liquid to be deflected into the environment. This not only increases the liquid consumption but also leads to a wet base which bears the risk that a person working on the base may slip and become injured.

However, in one embodiment, the reconditioned liquid can in particular partially be guided from the reconditioning device over the feedback line to a spray device which subjects the liquid to the belt in particular before it drains off from the belt back into the reservoir.

In one particularly preferred embodiment, the feedback line guides the reconditioned liquid partially to a spray device and partially directly into the reservoir. In particular, the feedback line comprises a branch line, one end of which leads the reconditioned liquid to the spray device while the other end leads reconditioned liquid directly back into the reservoir, in particular into the feedback opening of the reservoir. The inventors have found that this embodiment is of particular advantage, because it reduces on the one hand losses of liquid by leading a part of the reconditioned liquid directly back into the reservoir while it enables at the same time using the freshly reconditioned liquid to directly cool the belt in particular at the heat section. Thereby, freshly cooled liquid can be used to properly cool down the belt directly at the heat section with low temperature liquid while the liquid being used to cool the belt in particular by immersing the belt into the reservoir can be settled to have a different temperature compared to the temperature of the liquid being applied to the heat section.

In particular, the spray device is a sprinkler, in particular a water sprinkler. In particular, the spray device comprises a spray bar, in particular extending longitudinally in the belt width direction. In particular, the spray device extends in the belt width direction at least about 40%, 60%, 80%, 90%, 95% or 100% of the extension of the reservoir. In particular, the spray device is located in the gravitational direction above the reservoir, in particular in that liquid being deflected by the belt is deflected towards the reservoir. In particular, the spray device is mounted inside the belt. In particular, the spray device is mounted in the gravitational direction below the heat section and/or above the reservoir. In particular, the spray device is located in the gravitational direction above the immersion drum, the tension drum and/or the immersion section of the belt.

In one embodiment, the device further comprises a pump for driving the liquid from the reservoir to the reconditioning device and/or from the reconditioning device back to the reservoir and/or to the spray device. In particular, the pump is a circulation pump. In particular, the pump is located between the reconditioning device and the reservoir. In particular, the pump and/or the reconditioning device are located outside the reservoir. In particular, the reconditioning line is connected with a reconditioning opening in the reservoir in particular in a side wall of the reservoir and/or on the bottom of the reservoir. In particular, the reconditioning line extends from the reservoir, in particular from the reconditioning outlet, through the pump to the reconditioning device, in particular to the heat emission line.

In one embodiment, the device further comprises a pressure sensor in particular for measuring the hydrostatic pressure in the reservoir, in particular wherein the pressure sensor is located particularly substantially at the bottom of the reservoir. Additionally, or alternatively, the device further comprises a temperature sensor for measuring the temperature of the liquid in the reservoir. In particular, the temperature sensor is a PT temperature sensor, in particular a PT100 temperature sensor. The term substantially with regard to the location of the pressure sensor at the bottom of the reservoir has in particular to be understood in that the pressure sensor is located at the lowest position of the reservoir in the gravitational direction or maximally at a position being spaced maximally 5%, 10%, 15%, 20%, 25% or 30% of the extension of the reservoir in the gravitational direction spaced from the lowest position of the reservoir in the gravitational direction. In particular, the temperature sensor is located spaced from the bottom, in particular from the lowest position of the reservoir in the gravitational direction, by at least 5%, 10%, 15%, 20%, 25% or 30% and maximally 50%, 55%, 60%, 65%, 70%, 75% or 80% of the extension of the reservoir in the gravitational direction. Thereby, it can particularly be ensured that the temperature is measured in the gravitational position, where the belt, in particular the immersion section, immerses into the reservoir. In particular, the temperature sensor and/or the pressure sensor are located in the gravitational direction below the predetermined filling level of the reservoir. The inventors have found that the implementation of the temperature sensor is particularly beneficial in that the temperature of the liquid can be settled in that the belt is cooled enough to increase its lifetime but not to a too low temperature which could impair the shrinking, in particular compressive shrinking, process of the fabric web. Additionally, the inventors have found that the implementation of the pressure sensor is of particular advantage in that it enables calculating the filling level of the liquid in the reservoir as function of the hydrostatic pressure, in particular at the bottom of the reservoir. Thereby, it can be ensured that the filling level of the liquid is high enough, in particular is kept at the predetermined filling level, so that it is ensured that the belt immerses into the liquid.

In one embodiment, the device further comprises a supply line for feeding the reservoir and/or the spray device with liquid and/or an exhaust valve for draining liquid out of the reservoir. In particular, the supply line directly guides liquid into the reservoir. In particular, the supply line is connected to the reservoir, in particular with a supply opening of the reservoir. In particular, the supply line is connected with a valve so that the supply of the liquid can be adjusted, in particular initiated, increased, decreased and/or stopped. In particular, the exhaust valve is located substantially at the bottom of the reservoir. In particular, substantially can in this regard be understood as described with respect to the pressure sensor. In particular, the exhaust valve is located at the bottom of the reservoir.

The inventors have found that directly connecting the supply line with the reservoir reduces losses of the liquid compared to devices known from the prior art where the supply line is connected with a spray device which causes of a part of the liquid to be directly deflected into the environment upon spraying it onto the belt.

In one embodiment, the device comprises the heat drum along which the belt, in particular the outside of the belt, is guided for heating the fabric web between the belt and the heat drum. In particular, the device further comprises the two pressure drums mounted in the belt running direction upwards and downwards of the heat drum for urging the belt against the heat drum. The heat drum and/or the pressure drums can in particular be realized as previously described.

In particular, the reservoir is a basin. In particular, the reservoir is tapered in the gravitational direction. In particular, the reservoir comprises two side walls extending in the belt width direction and two side walls opposing each other in the belt width direction. In particular, the side walls extending in the belt width direction and the side walls opposing each other in the belt width direction form a jacket of the reservoir. In particular, the at least one, in particular both, side walls extending in the belt width direction is/are inclined, in particular in the same direction relative to a vertical plane as belt sections facing the respective side wall in the gravitational direction upon entering and leaving the reservoir. In particular, the side walls extending in the belt width direction and the side walls opposing each other in the belt width direction form a jacket of the reservoir. In particular, the side walls opposing each in the belt width direction comprise recesses, in particular half circular shaped recesses, for supporting, in particular rotatably supporting or mounting, the immersion drum or the tension drum.

In particular, the reservoir comprises a bottom wall. In particular, the bottom wall is connected with the side walls, in particular with the jacket formed by the side walls, so as to form the reservoir, in particular the basin. In one embodiment, the bottom wall is tapered in the gravitational direction, in particular towards the middle of the reservoir in belt width direction and/or belt running direction. In particular, the bottom wall is tapered towards a liquid outlet, in particular to the exhaust valve and/or the reconditioning line, in particular in that liquid is driven by gravitation towards the liquid outlet and/or the reconditioning line.

The invention also relates to an arrangement for shrinking, in particular compressive shrinking, the fabric web. The arrangement is in particular a shrinking arrangement, in particular a compressive shrinking arrangement. In particular, the arrangement comprises a device for shrinking the fabric web being designed according to one or both of the previously described aspects of the invention or according to any of its embodiments. In particular, the arrangement further comprises a dryer device, in particular a felt dryer, located in the fabric web running direction downwards of the device for shrinking the fabric web. Additionally, or alternatively, the arrangement comprises a stretch device being located in the fabric web running direction upwards of the device for shrinking the fabric web. Additionally, or alternatively, the arrangement comprises a heat device being arranged in the fabric web running direction upwards of the device for shrinking the fabric web and/or upwards of the stretch device. In particular, the heat device comprises a plurality, in particular at least two, four, six, eight, ten or twelve heat drums. In particular, the fabric web is guided over the plurality of heat drums, in particular, in a meandering manner. In particular, the fabric web is guided in that it passes in the fabric web running direction first the heat device, then the stretch the device, then the device for shrinking the fabric web and then the dryer device, in particular the felt dryer.

One aspect of the invention relates to a method for shrinking, in particular compressive shrinking a fabric web, in particular a denim web. The method comprises the steps of conveying the fabric web with a belt, in particular with a rubber belt, and immersing the belt into a liquid. The method can be conducted with a device or an arrangement as previously described. In particular, the method can be conducted in that can be operated with the previously described device. In particular, the previously described devices can be designed in that they can be used for operating the inventive method.

In particular, the belt can be immersed into the liquid in the reservoir, in particular as previously described. In particular, the reservoir can be designed and/or located in that it collects liquid draining off from the belt. In particular, the liquid in the reservoir can be reconditioned, in particular cooled, in particular with a liquid circuit, in particular by guiding the liquid from the reservoir through the reconditioning device back into the reservoir, in particular directly back into the reservoir. In particular, reconditioning has to be understood as cooling.

Another aspect of the invention is directed to a method for maintaining a device for shrinking, in particular compressive shrinking, a fabric web, in particular a denim web. In particular, the method can be applied to the device after conducting the method according to the previously described aspect of the invention. Additionally, or alternatively, the method can be used to maintain a device being designed according to one or both of the previously described aspects of the invention relating to the device and/or to any of its embodiments.

The method comprises the step of moving a reservoir from a working position, in which the reservoir is used for collecting a liquid and/or cooling a belt of the device, away from the belt into a maintenance position. In particular, in the working position, the belt immerses into the liquid. Additionally, or alternatively, in the maintenance position, the belt does not immerse into the liquid. In particular, in the working position, the reservoir can be located in the gravitational direction above a base of the device. Additionally, or alternatively, in the maintenance position, the reservoir can be located below the base of the device. In particular, the base of the device is designed in that persons operating or maintaining the device can stand on the base. In particular, the base can be realized as the top of a basement. In particular, a chamber can be provided below the base in the basement in that the reservoir can in the maintenance position be in particular completely located within the chamber. Thereby, the base can be in particular free of the reservoir. Afterwards, a cover can be moved to close an opening through which the reservoir is moved into the chamber.

With the inventive method for maintaining the device, the accessibility of the belt, the pressure drums, the heat drum and/or the immersion drum or tension drum can be increased which facilitates maintaining the device. In particular, the movability of the reservoir between the working position and the maintenance position enables to combine two advantages with each other, namely the previously described immersion of the belt into the liquid and the increased accessibility of the belt and drums of the device for maintenance.

In particular, maintaining has to be understood to encompass removing the belt, the pressure drums, the immersion drums and/or the heat drum from the device and/or maintaining components of the device, such as the belt and/or the drums directly on the device. In particular, maintaining the device, in particular the belt, encompasses grounding the belt.

In one embodiment, the method for maintaining the device comprises the step of moving at least one, in particular two, pressure drum of the device from an urging position, in which the at least one pressure drum urges the belt against a heat drum, towards the working position of the reservoir into a loose position, in which the belt is in unstretched condition, in particular for facilitating the belt and/or the at least one pressure drum, the heat drum and/or the immersion drum to be removed from the device for maintenance. In particular, in the loose position, at least part of the belt contacts the base of the device. In particular, in the loose position, at least one of the pressure drums, in particular both pressure drums, and/or the immersion drum lie on the base of the device, in particular being only spaced from the base by the belt. The inventors have found that laying the belt and/or at least one pressure drum and/or the immersion drum onto the base of the device is of particular advantage for maintenance. Therefore, in particular moving the reservoir from a working position above the base where the reservoir properly collects liquid and enables immersing the belt into the liquid, into the maintenance position below the base, is of particular advantage in that it decreases on the one hand liquid consumption or increases the cooling effect without increasing liquid consumption and on the other hand reduces efforts for maintaining the device.

The invention also relates to a fabric web, in particular a denim web, being shrunk, in particular compressive shrunk, with the previously described device and/or the previously described arrangement and/or with the previously described method.

Preferred embodiments of the invention are described in the dependent claims. Further advantages, features, and characteristics of the invention become apparent by the subsequent description of the preferred embodiments which are illustrated in the figures, wherein:
- Fig. 1: is a schematic side view on a device according to the invention;
- Fig. 2: is a schematic side view on a device known in the art;
- Fig. 3a: is a schematic side view on a device according to the invention with the reservoir in working position;
- Fig. 3b: is a schematic side view on a device according to the invention with the reservoir in maintenance position;
- Fig. 4a: is an enlarged view of the encircled section of Fig. 3a;
- Fig. 4b: is an enlarged view of the encircled section of Fig. 3b;
- Fig. 5: is a perspective view on a movably mounted reservoir;
- Fig. 6: is a schematic front view on a reservoir with liquid circuit;
- Fig. 7a: is a perspective view on the reservoir of figure 6;
- Fig. 7b: is a side view on the reservoir of figure 6;
- Fig. 7c: is a bottom view on the reservoir of figure 6; and
- Fig. 8: is a schematic side view on a device in an arrangement with felt dryer, stretch device and heat device;

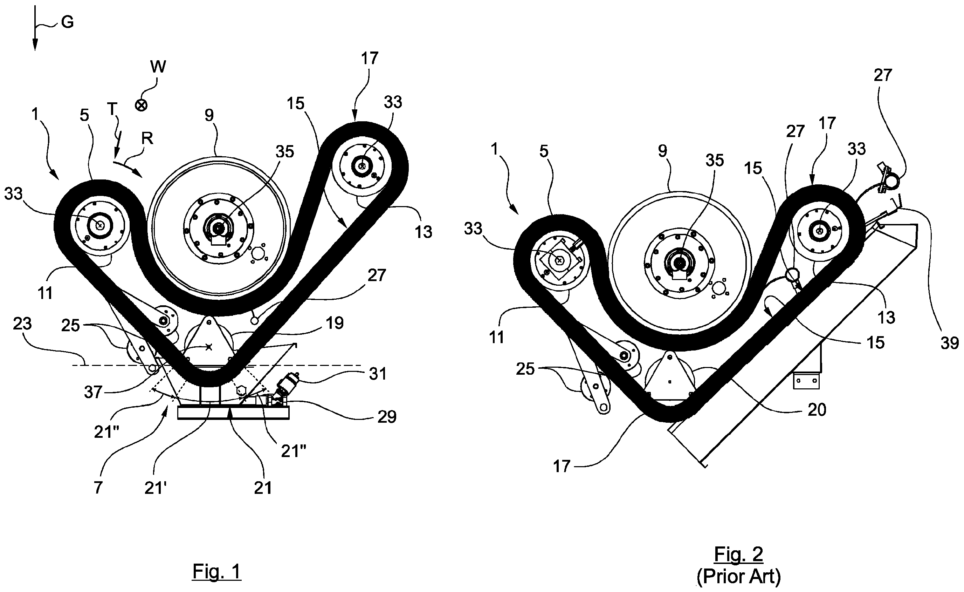

Fig. 1 illustrates a device 1 for compressive shrinking a fabric web (not shown in Fig. 1) according to one aspect of the invention. The device 1 comprises a belt 5 for conveying the fabric web through the device 1 and a reservoir 7 through which the belt 5 is guided in that it immerses into a liquid in the reservoir 7. The device 1 comprises one heat drum 9 which contacts the outside of the belt 5 in a heat section. The device 1 further comprises two pressure drums 11 and 13 urging the belt 5 against the heat drum 9. The pressure drums 11, 13 guide the belt 5 along its inside 15 and urge the outside 17 of the belt against the heat drum 9. The device 1 also comprises an immersion drum 19 guiding the belt 5 in that it immerses the liquid in the reservoir 7 along an immersion section 21. The immersion drum 19 partially protrudes into the reservoir 7. The immersion drum 19 guides the belt 5 at its inside 15. By rotating the pressure drums 11, 13 and/or the immersion drum 19, the belt 5 is driven in the belt running direction R along a belt guiding path. The belt 5 has a closed structure, in other words is formed as a loop. Fig. 1 shows the belt 5, the pressure drums 11, 13 and the immersion drum 19 in an urging position. In the urging position, the pressure drums 11, 13 urge the belt 5 against the heat drum 9 while the immersion drum 19 tensions the belt 5 between the pressure drums 11 and 13. Thereby, the belt 5 becomes compressed against the pressure drum 9 and is stretched at least between the pressure drums 11, 13 and the immersion drum 19. In order to compressively shrink a fabric web, the fabric web is conveyed between the heat drum 9 and the belt 5 so that the fabric web is forced to follow the compression, the stretch and the subsequent relaxation of the belt 5 which in particular in combination with the heat being applied to the fabric web by the heat drum 9 leads to compressive shrinking of the fabric web.

The guiding path of the belt 5 extends in the belt running direction R from the upwardly mounted pressure drum 11 to the downwardly mounted pressure drum 13 in a u-shaped manner. From the downwardly mounted pressure drum 13 in the belt running direction R over the immersion drum 19 to the upwardly mounted pressure drum 11, the belt 5 extends in a v-shaped manner. The terms upwards and downwards with respect to the pressure drum relate to the relative position with respect to the belt running direction R, which means that the belt 5 passes in the belt running direction R first the upwardly mounted pressure drum 11, then the heat drum 9 and then the downwardly mounted pressure drum 13.

In addition to the belt running direction R, the belt extends in the belt width direction W and in the belt thickness direction T. The dashed line 23 in Fig. 1 illustrates a predetermined filling level 23 up to which the reservoir 7 is filled with liquid, in particular with water, so that the belt 5 immerses along its entire thickness, in other words its extension in the thickness direction, into the liquid. Thereby, the immersion section 21 of the belt 5 comprises a ring segment immersion section 21' and two straight immersion sections 21" extending from the ring segment immersion section 21' towards the pressure drums 11, 13.

The device 1 also comprises two squeezing rollers 25 being mounted in the belt running direction R downwardly of the reservoir 7. The squeezing rollers 25 serve to squeeze out liquid adhering to the belt 5 upon leaving the reservoir 7. Downwards and upwards of the reservoir 7 in the belt running direction R, the belt 5 is guided in that liquid adhering to the belt 5 or being squeezed out by the squeezing rollers 25 is driven by gravitation towards the reservoir 7 so that the liquid is properly collected by the reservoir 7 which reduces losses of liquid.

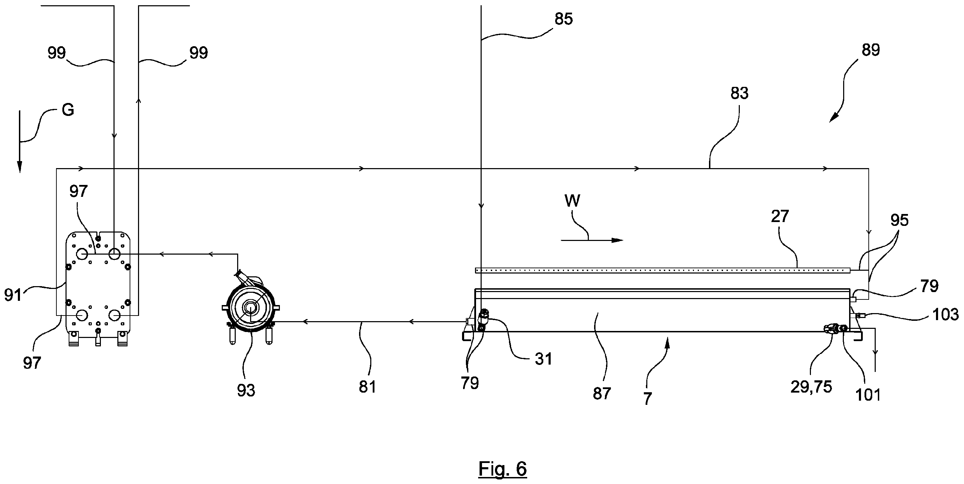

In addition to the reservoir 7, the device 1 also comprises a spray device 27 for applying liquid to the belt 5 outside of the reservoir 7. The spray device 27 is located in that the liquid can be subjected to the belt 5 at a heating section along which the belt 5 contacts the heat drum 9. The spray device 27 is described in more detail with respect to Fig. 6. Additionally, the device 1 comprises an exhaust valve 29 for draining the liquid out of the reservoir 7 and a feed valve 31 to be connected with a supply line for feeding the reservoir 7 with liquid. The exhaust valve 29 and the feed valve 31 are described in more detail with respect to Fig. 6.

The heat drum 9, the pressure drums 11, 13 and the immersion drum 19 are rotatably mounted about pressure drum rotation axis 33, a heat drum rotation axis 35, and an immersion drum rotation axis 37.

Fig. 2 illustrates a device for compressive shrinking of a fabric web known in the art. The heat drum 9, the pressure drums 11 and 13, and the squeezing rollers 25 are realized in the art similarly to the inventive device shown in Fig. 1. However, compared to the inventive solution of Fig. 1, devices known in the art do not immerse the belt 5 into a liquid. Accordingly, instead of an immersion drum, Fig. 2 shows a tension drum 20. Instead, two spray devices 27 are used, one of which subjects the inside 15 of the belt 5 with liquid while the other one subjects the outside 17 of the belt 5 with liquid. In order to ensure that the liquid is kept long enough on the outside 17 of the belt 5 so as to properly cool the outside 17 of the belt 5, the device 1 makes use of a felt 39. The inventors have found that with the inventive solution shown in Fig. 1, the complexity of the device 1 can be reduced, in particular by omitting both or at least one of the spray devices 27 and by omitting the felt 39. Thereby, costs for the device 1 and for its maintenance can be reduced. Additionally, the inventors have found that immersing the belt 5 into the liquid as shown in Fig. 1 largely increases the cooling effect compared to cooling the devices shown in Fig. 2 so that the liquid consumption by the same cooling effect can be reduced and/or the cooling effect can by increased with the same water consumption.

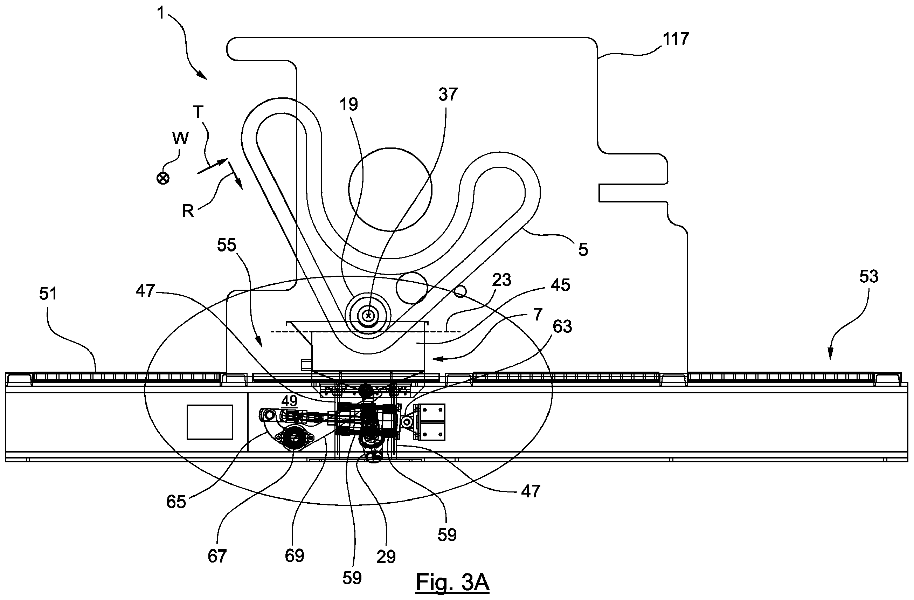

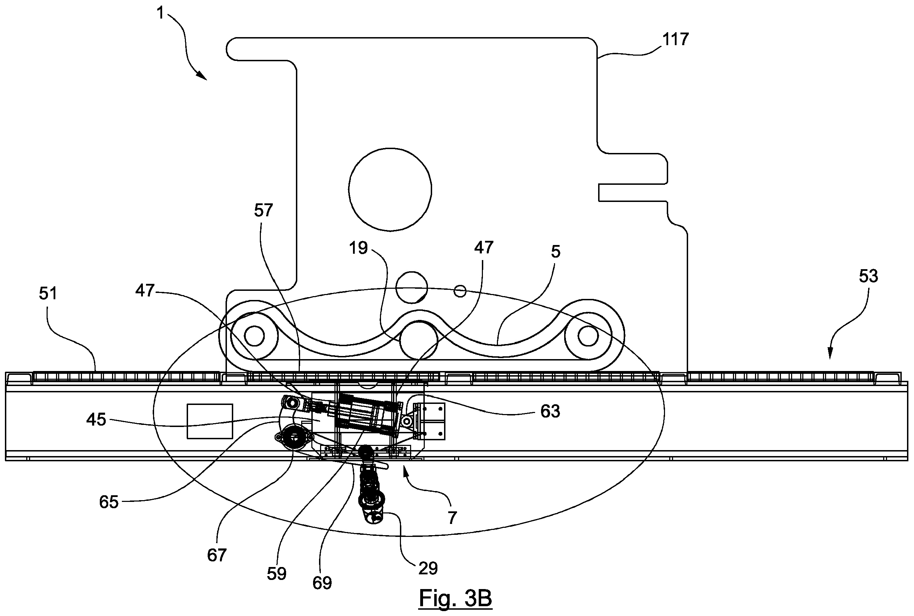

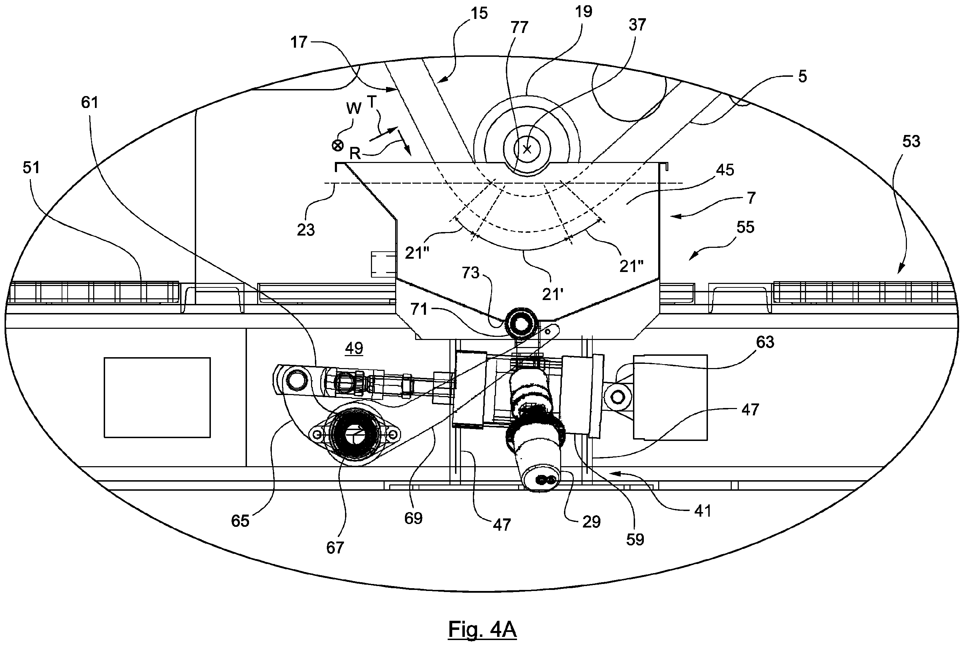

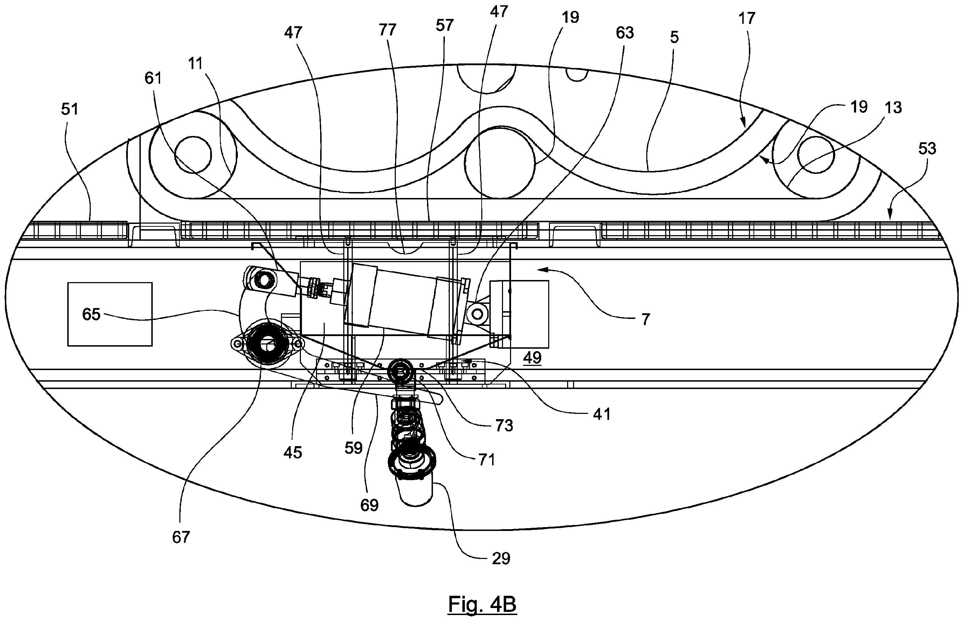

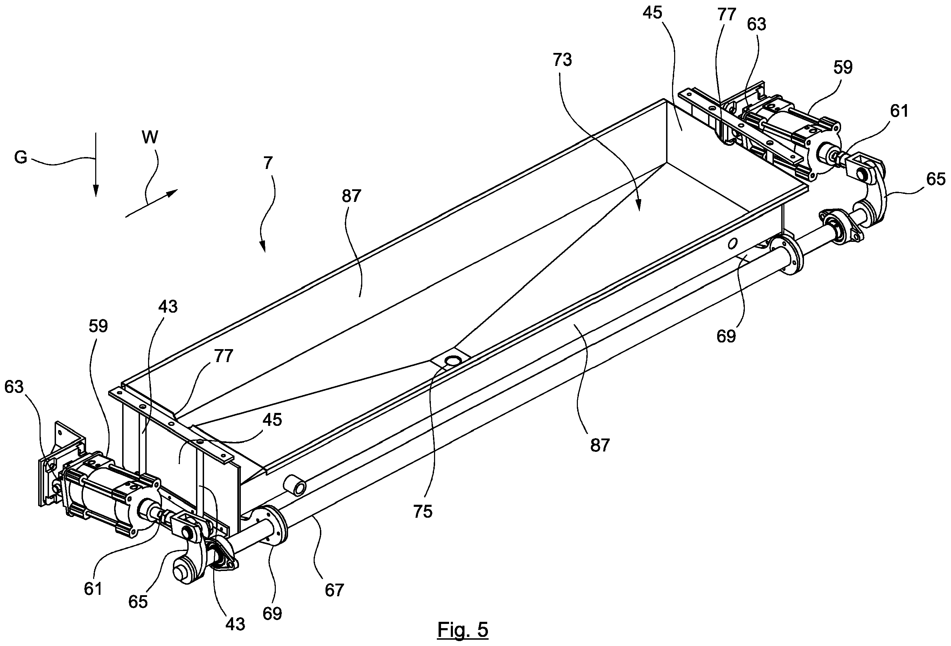

Fig. 5 illustrates a movably mounted reservoir 7 for collecting a liquid being applied to the belt 5 of a device 1 as shown in Fig. 1 and in Figs. 3a to 4b and Fig. 8. The implementation of such a movably mounted reservoir 7 in a device 1 for shrinking a fabric web represents another aspect of the invention. Such a movably mounted reservoir 7 can be implemented into a device 1 as shown in Figs. 1, 3a to 4b and 8 thereby combining the inventive concepts of immersing the belt 5 into the reservoir 7 and the concept of movably mounting the reservoir 7. As previously described, this is of particular advantage because the movable mounting of the reservoir 7 enables on the one hand to properly position the reservoir 7 for immersing the belt 5 into the reservoir 7 and for collecting liquid draining off from the belt 5 while on the other hand the reservoir 7 can be moved away from the belt 5 so as to increase the accessibility of the belt 5, the pressure drums 11 and the immersion drum 7 for maintenance. Such combination of both inventive concepts is illustrated in Figs. 3a to 4b, wherein Figs. 3a and 4a illustrate the reservoir 7 in a working position in which the belt 5 immerses into the reservoir 7 while the Figs. 3b and 4b illustrate the reservoir in a maintenance position in which the belt 5 does not immerse into the liquid. Additionally, Figs. 3b and 4b illustrate the belt 5, the pressure drums 11, 13 and the immersion drum 19 in the loose position in which the drums 9, 11, 13, 19 and the belt 5 are properly accessible for maintenance.

The movably mounted reservoir 7 will now be described in more detail with reference to the Figs. 3a, 3b, 4a, 4b and 5. However, it is once more emphasized that the movably mounted reservoir can also be realized alone, in other words without guiding the belt 5 in that it immerses into the liquid in the working position.

Since the attention in Figs. 3a to Fig. 4b shall be drawn to the movably mounted reservoir 7, the heat drum 9, the pressure drums 11, 13 and the immersion drum 19 are only schematically illustrated or left out. In Figs. 3a to 4b, the components of the movably mounted reservoir 7 are partially illustrated transparent and partially simplified and left out in order to properly show the kinematic interaction of the components of the reservoir 7. Detailed illustrations of the components of the reservoir 7 can be seen in Fig. 5.

As can be seen by comparing Fig. 3a with Fig. 3b, the reservoir 7 is movably mounted in the gravitational direction G. For this purpose, the reservoir 7 is movably mounted along a linear guidance 41. The linear guidance 41 is realized by two carrier rail arrangements 41 being mounted on opposing sides of the reservoir 7 in the belt width direction W. Each carrier rail arrangement 41 comprises two carriers 43 in the form of longitudinally extending bars 43. The bars 43 are fixedly mounted on the side walls 45 of the reservoir 7 opposing each other in the belt width direction W. The bars 43 extend in the gravitational direction G. The rails 47 of the carrier rail arrangement 41 are mounted in a chamber 49 below the base 51 of the device 1. Thereby, as can be seen by comparing Fig. 4a and 4b, the reservoir 7 can be moved from the working position shown in Fig. 4a above the base 51 into a maintenance position below the base 51 shown in Fig. 4b.

The device 1 comprises a basement 53. The basement 53 comprises at its top in the gravitational direction G the base 51. The base 51 is the platform on which a person operating or maintaining the device 1 can stand. The base 51 comprises an opening 55 through which the reservoir can enter the chamber 49. The rails 47 of the carrier rail arrangements 41 are at least partially mounted on side walls of the chamber 49 in the basement 53. As can be seen in Figs. 3b and 4b, thanks to the possibility of moving the reservoir 7 below the base 51, the belt 5, the pressure drums 11, 13 and the immersion drum 19 can be moved from the urging position shown in Fig. 1, Fig. 3a and Fig. 4a, in which the two pressure drums 11, 13 urge the belt 5 against the heat drum 9 into a loose position shown in Figs. 3b and 4b in which the belt 5 is in unstretched condition which facilitates the belt 5, at the pressure drums 11, 13, the heat drum 9 and the immersion drum 19 to be accessed or removed from the device 1 for maintenance. In the loose position shown in Figs. 3b and Fig. 4b, the belt 5 lies on the base 51. The pressure drums 11, 13 and the immersion drum 19 are spaced from the base 51 only by the belt 5. As can be seen in particular by comparing Fig. 4a and Fig. 4b, the opening 45 shown in Fig. 4a is closed in Fig. 4b by a cover 57 closing the chamber 49 so that the belt 5 can be laid on the base 51 without falling into the chamber 49 and/or so that a person maintaining the device 1 cannot accidentally step into the chamber 49.

The device 1 comprises a drive comprising two cylindrical drives 59. The cylindrical drives 59 are spaced from each other in the belt width direction W. The reservoir 7 is located in between the two cylindrical drives 59. The two cylindrical drives 59 are located spaced from the side walls 45 of the reservoir 7 opposing each other in the belt width direction W. The previously described carrier rail arrangements 41 are located in between the reservoir 7 and the cylindrical drives 59. The cylindrical drives 59 are pivotably mounted about pivot bearings 63. The piston 61 of each cylindrical drive 59 is coupled to a drive lever 65. The drive levers 65 are coupled to a rod 67. The rod 67 extends in the belt width direction W along the entire extension of the reservoir 7. By the drive levers 65, the linear movement of the piston 61 is transferred into a rotation of the rod 67. The rod 67 is coupled with two reservoir levers 69. Thereby, the rotation of the rod 67 is transferred into a pivot movement of the reservoir levers 69. The reservoir levers 69 are located in the belt width direction W between the side walls 45 opposing each other in the belt width direction W. The reservoir levers 69 are coupled with the reservoir 7. As can be seen by comparing Figs. 4a and 4b, the reservoir levers 69 are coupled with the reservoir 7 in that the pivot movement of the reservoir levers 69 causes the reservoir 7 to follow a linear movement in the gravitational direction G. For this purpose, the reservoir levers 69 are coupled with the reservoir 7 in a sliding contact. The sliding contact is realized by rolling means 71 having a circular cross-section. The rolling means 71 contact with one side the lever and with the other side the bottom 73 of the reservoir 7. The bottom 73 of the reservoir 7 comprises a half circular shaped recess bearing the rolling means 71.

The reservoir 7 shown in Fig. 5 comprises a bottom 73 being tempered in the gravitational direction G. The bottom 73 is tempered in the gravitational direction G in a pyramid manner. The reservoir 7 comprises at the lowest position in the gravitational direction G an exhaust outlet 75 for draining liquid out of the reservoir 7. The exhaust outlet 75 can be connected with an exhaust valve 29 as shown in Fig. 1 and Fig. 6.

The side walls 45 opposing each other in the belt width direction W comprise recesses 77 for bearing the immersion drum 19. The reservoir 7 additionally comprises liquid inlets/outlets 79 which can be connected with the reconditioning line 81, feedback line 83 and/or supply line 85 as shown in Fig. 6.

In addition to the side walls 45 opposing each other in the belt width direction W, the reservoir 7 comprises two side walls 87 extending in the belt width direction W. The side walls 87 extending in the belt width direction W and the side walls 45 opposing each other in the belt width direction W form a reservoir jacket confining together with the bottom 73 of the reservoir 7 a filling volume for liquid to be filled into the reservoir 7.

As can be seen by comparing Figs. 4a and 4b, the reservoir 7 is guided in that it can be entirely located inside the chamber 49. This position is the maintenance position. Additionally, the cylindrical drives 59, the drive levers 65, the rod 67 and the reservoir levers 69 are designed in that they extend in the maintenance position, shown in Figs. 3b and 4b, and in the working position, shown in Figs. 3a and 4a, inside the chamber 49 below the base 51. In Figs. 3a to 4b, the exhaust valve 29 is schematically illustrated.

Fig. 6 illustrates an embodiment of the invention in which the belt 5, the immersion drum 19, the pressure drums 11, 13 and the heat drum 9 are not showing for properly showing the liquid circuit 89 and the components being integrated into the liquid circuit 89. It shall be clear that this embodiment can be combined with the inventive concept of immersing the belt 5 into the reservoir 7 and/or with the inventive concept of movably mounting the reservoir 7.

In Fig. 6 the device comprises a reconditioning device 91 in the form of a plate heat exchanger 91. The reconditioning device 91 serves to cool the liquid. The liquid circuit 89 guides the liquid from the reservoir 7 through the reconditioning device 91 directly back to the reservoir 7 and to the spray device 27. Thereby, the liquid is driven by a pump 93 in the form of a circulation pump 93 from the reservoir 7 through the reconditioning device 91 directly back into the reservoir 7 and to the spray device 27. The liquid circuit 89 comprises a reconditioning line 81 guiding liquid from the reservoir 7 through the pump 93 to the reconditioning device 91. The liquid circuit 89 further comprises a feedback line 83 guiding the liquid from the reconditioning device 91 directly back to the reservoir 7 and to the spray device 27. For this purpose, the feedback line 83 comprises a branch line 95 separating the reconditioned liquid into one part being guided to the spray device 27 and one part being directly guided to the reservoir 7. The reconditioning line 81 is connected with the reservoir 7 by a liquid outlet 79 in the form of a reconditioning outlet 79. The feedback line 83 is connected with the reservoir 7 by a liquid inlet 79 in the form of a feedback opening.

The reconditioning device 91 comprises a heat emission line 97 and a heat absorption line 99, the heat emission line 97 is guided through the reconditioning device 91 in that heat is transferred from the heat emission line 97 to the heat absorption line 99. The reconditioning line 81 leads the liquid into the heat emission line 97. After leaving the reconditioning device 91, the heat emission line 97 leads the liquid into the feedback line 83. The heat absorption line 99 guides a heat absorption liquid through the reconditioning device 91 for cooling the liquid in the heat emission line 97. The temperature of the heat absorption liquid is lower than the temperature of the liquid coming from the reservoir 7.

The device comprises a pressure sensor 101 for measuring the hydrostatic pressure in the reservoir 7. The pressure sensor 101 is located at the bottom 73 of the reservoir 7. Additionally, the device comprises a temperature sensor 103 in the form of a PT100 temperature sensor. The temperature sensor 103 is located substantially at the middle of the reservoir 7 in the gravitational direction G. The device further comprises a supply line 85 for feeding the reservoir 7 with liquid. The supply line 85 is connected to the reservoir 7 via a feed valve 31. The device further comprises an exhaust valve 29 for draining liquid through the exhaust outlet 75 out of the reservoir.

The spray device 27 is located in the gravitational direction G above the reservoir 7 and extends in the belt width direction W along the entire extension of the reservoir.

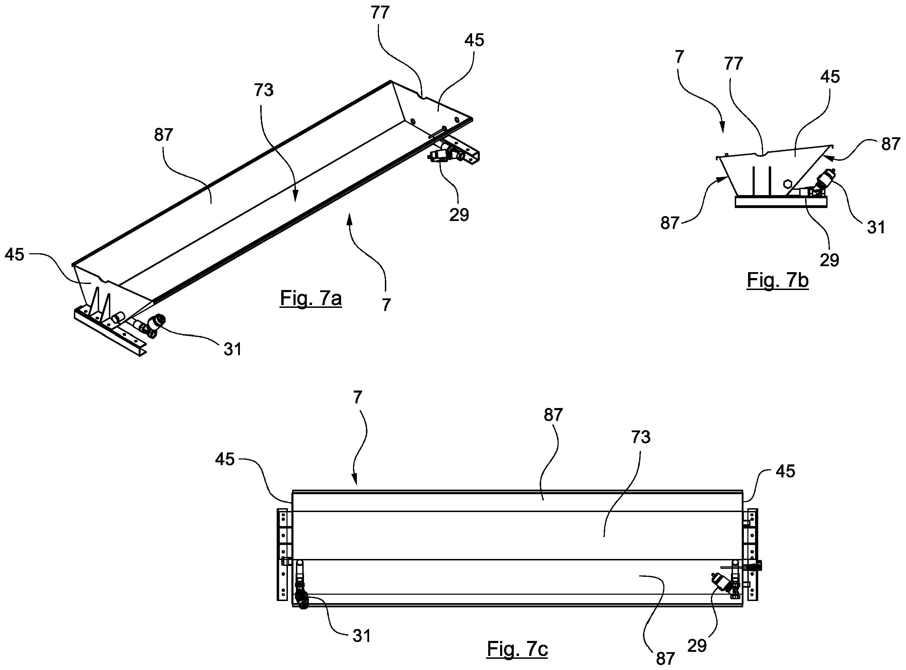

The Figs. 7a, 7b and 7c illustrate the reservoir 7 shown in Fig. 6 in side view, perspective view and bottom view without the spray device 27 and without the liquid circuit 89. The reservoir 7 shown in the Figs. 7a to 7c illustrates an embodiment without the realization of the inventive concept of movably mounting the reservoir 7. However, such reservoir 7 can be used for implementing the inventive concept of immersing the belt 5 into the reservoir 7. As can be particularly seen in Fig. 7b, the side walls 87 extending in the belt width direction W are tapered in the gravitational direction G. Thereby, the cross-section about which the reservoir 7 can collect liquid draining off the belt 5 and the space for immersing the belt 5 into the liquid can be increased without unnecessarily increasing the filling volume of the reservoir 7.

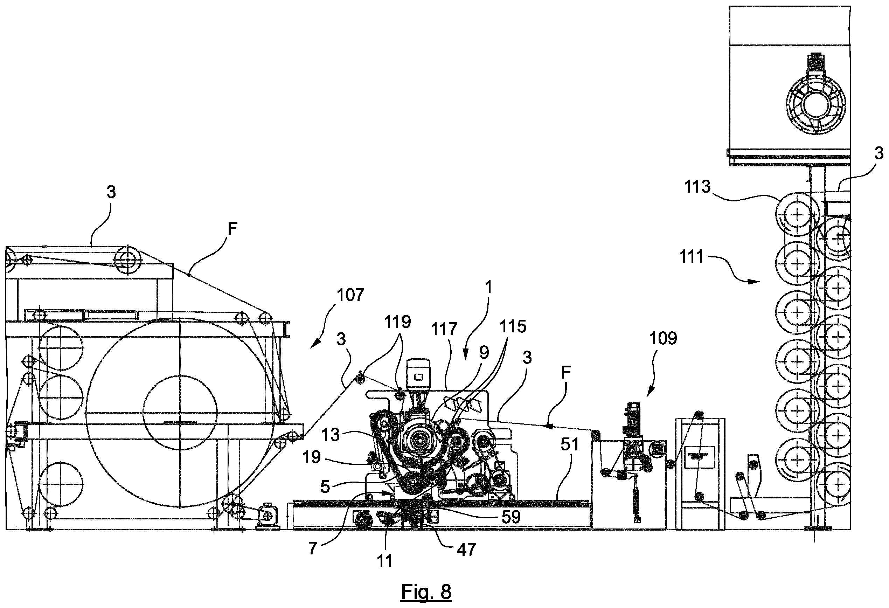

Fig. 8 illustrates an arrangement with a device 1 for compressive shrinking of a fabric web 3 being guided in fabric web running direction F through the device 1. The device 1 is a device as shown in the Figs. 3a to 4b further including components being not shown in the Figs. 3a to 4b. In the fabric web running direction F downwards of the device 1, the arrangement comprises a dryer device 107 in the form of a felt dryer 107. Upwards the device 1 in the fabric web running direction F, the arrangement comprises a stretch device 109 for pre-stretching the fabric web 3 before entering the compressive shrinking device 1. Upwards of the compressive shrinking device 1 and the stretch device 109, the arrangement comprises a heat device 111 for preheating the fabric web 3 before entering the stretch device 109 and the compressive shrinking device 1. The heat device comprises twelve heat drums 113 along which the fabric web 3 is guided in a meandering manner.

The compressive shrinking device 1 comprises two feed drums 115 being mounted on a support structure 117 of the device 1 for guiding the fabric web 3 from the stretch device 109 to the compressive shrinking device 1. Additionally, the device 1 comprises one exit drum 119 mounted on the support structure 117 for guiding the fabric web 3 from the compressive shrinking device 1 to the felt dryer 107. One additional exit drum 119 is mounted between the felt dryer 107 and the shrinking device 1.

The features disclosed in the above description, the figures and the claims may be significant for the realisation of the invention in its different embodiments individually as in any combination.

### Reference signs:

- 1: device, shrinking device, compressive shrinking device
- 3: fabric web
- 5: belt
- 7: reservoir
- 9: heat drum
- 11: upwards mounted pressure drum
- 13: downwards mounted pressure drum
- 15: inside of the belt
- 17: outside of the belt
- 19: Immersion drum
- 20: tension drum
- 21: immersion section
- 21': ring segment immersion section
- 21": straight immersion section
- 23: predetermined filing level
- 25: squeezing rollers
- 27: spray device
- 29: exhaust valve
- 31: feed valve
- 33: pressure drum rotation axis
- 35: heat drum rotation axis
- 37: immersion drum rotation axis
- 39: felt
- 41: linear guidance, carrier-rail-arrangement
- 43: carrier, bars
- 45: side walls opposing each other in belt width direction
- 47: rail
- 49: chamber
- 51: base
- 53: basement
- 55: opening
- 57: cover
- 59: cylindrical drive
- 61: piston
- 63: pivot bearings
- 65: drive lever
- 67: rod
- 69: reservoir lever
- 71: rolling means
- 73: bottom of the reservoir
- 75: exhaust outlet
- 77: recesses
- 79: liquid inlet/outlet
- 81: reconditioning line
- 83: feedback line
- 85: supply line
- 87: sidewalls extending in belt width direction
- 89: liquid circuit
- 91: recondition device, plate heat exchanger
- 93: pump
- 95: branch line
- 97: heat emission line
- 99: heat absorption line
- 101: pressure sensor
- 103: temperature sensor
- 107: dryer device, felt dryer
- 109: stretch device
- 111: heat device
- 113: heat drums
- 115: feed drum
- 117: support structure of the device
- 119: exit drum

- T: Belt thickness direction
- W: Belt width direction
- R: Belt running direction
- F: Fabric web running direction
- G: Gravitational direction

## Claims

1. A device (1) for shrinking a fabric web (3), in particular a denim web, comprising:
- a belt (5) for conveying the fabric web (3) through the device;
- a heat drum (9);
- at least one pressure drum (11, 13); and
- a reservoir (7) for collecting a liquid being applied to the belt (5), wherein the reservoir (7) is movably mounted in that it can be moved from a working position, in which the reservoir (7) is used for collecting the liquid and/or cooling the belt (5), away from the belt (5) into a maintenance position, **characterized in that,**
the at least one pressure drum (11, 13) can be moved from an urging position, in which the at least one pressure drum (11,13) urges the belt (5) against the heat drum (9), towards the working position of the reservoir (7) into a loose position, in which the belt (5) is in unstretched condition.

2. The device (1) according to claim 1, wherein the reservoir (7) is movably mounted in that it can be moved away and towards the belt (5), in particular in that it can be moved from a working position for collecting the liquid, in particular in which the belt (5) immerses into the liquid, away from the belt (5) into a maintenance position, in particular in which the belt (5) does not immerse into the liquid.

3. The device (1) according to claim 1 or 2, wherein the reservoir (7) is movably mounted along a linear guidance (41) and/or in gravitational direction (G), in particular in that the reservoir (7) can be moved from a working position above a base (51) of the device(i) into a maintenance position below the base (51).

4. The device (1) according to one of the claims 1 to 3, wherein the device (1) comprises at least one drive, in particular at least one cylindrical drive (59), for moving the reservoir (7), in particular wherein the at least one drive and the reservoir (7) are coupled by at least one lever (65, 69), in particular wherein the at least one drive is coupled with at least one drive lever (65) and the reservoir (7) is coupled with at least one reservoir lever (69), in particular wherein the at least one drive lever (65) and the at least one reservoir lever (69) are coupled with each other by a rod (67).

5. The device (1) according to one of the preceding claims, further comprising:
- a reconditioning device (91), in particular a cooling device (91), for the liquid; and
- a liquid circuit (89) for guiding the liquid from the reservoir (7) through the reconditioning device (91) in particular directly back to the reservoir (7) and/or to a spray device (27) for applying the liquid to the belt (5).

6. The device (1) according to one of the preceding claims, further comprising a pressure sensor (101) for measuring the hydrostatic pressure in the reservoir (7), in particular wherein the pressure sensor (101) is located substantially at the bottom (73) of the reservoir (7), and/or a temperature sensor (103) for measuring the temperature of the liquid in the reservoir (7).

7. The device (1) according to one of the preceding claims, further comprising a supply line (105) for feeding the reservoir (7) and/or a spray device (27) with liquid and/or an exhaust valve (29) for draining liquid out of the reservoir (7).

8. The device (1) according to one of the preceding claims, comprising a heat drum (9) along which the belt (5), in particular the outside (17) of the belt (5), is guided for heating the fabric web (3) between the belt (5) and the heat drum (9), in particular further comprising two pressure drums (11, 13) mounted in belt (5) running direction upwards and downwards the heat drum (9) for urging the belt (5) against the heat drum (9).

9. A method for maintaining a device (1) for shrinking a fabric web (3), in particular a denim web, comprising the steps of:
- moving a reservoir (7) from a working position, in which the reservoir (7) is used for collecting a liquid and/or cooling a belt (5) of the device (1), away from the belt (5) into a maintenance position, and
- moving at least one pressure drum (11, 13) of the device (1) from an urging position, in which the at least one pressure drum (11, 13) urges the belt (5) against a heat drum (9), towards the working position of the reservoir (7) into a loose position, in which the belt (5) is in unstretched condition.

## Patentansprüche

1. Vorrichtung (1) zum Schrumpfen einer Gewebebahn (3), insbesondere einer Jeansstoffbahn, umfassend:
- einen Riemen (5) zum Transportieren der Gewebebahn (3) durch die Vorrichtung;
- eine Wärmetrommel (9);
- wenigstens eine Drucktrommel (11, 13); und
- ein Reservoir (7) zum Auffangen einer auf den Riemen (5) aufgebrachten Flüssigkeit, wobei das Reservoir (7) beweglich gelagert ist, so dass es aus einer Arbeitsposition, in der das Reservoir (7) zum Auffangen der Flüssigkeit und/oder zum Kühlen des Riemens (5) verwendet wird, vom Riemen (5) weg in eine Wartungsposition bewegbar ist, **dadurch gekennzeichnet, dass** die wenigstens eine Drucktrommel (11, 13) aus einer Druckposition, in der die mindestens eine Drucktrommel (11, 13) den Riemen (5) gegen die Heiztrommel (9) drängt, in Richtung der Arbeitsposition des Reservoirs (7) in eine Loseposition bewegbar ist, in der sich der Riemen (5) im ungedehnten Zustand befindet.

2. die Vorrichtung (1) nach Anspruch 1, wobei das Reservoir (7) derart beweglich gelagert ist, dass es von dem Riemen (5) weg und auf diesen zu bewegt werden kann, insbesondere indem es von einer Arbeitsposition zum Auffangen der Flüssigkeit, in der insbesondere der Riemen (5) in die Flüssigkeit eintaucht, von dem Riemen (5) weg in eine Wartungsposition bewegt werden kann, in der insbesondere der Riemen (5) nicht in die Flüssigkeit eintaucht.

3. Vorrichtung (1) nach Anspruch 1 oder 2, wobei das Reservoir (7) entlang einer Linearführung (41) und/oder in Schwerkraftrichtung (G) beweglich gelagert ist, insbesondere indem das Reservoir (7) von einer Arbeitsposition oberhalb einer Basis (51) der Vorrichtung (1) in eine Wartungsposition unterhalb der Basis (51) bewegbar ist.

4. Vorrichtung (1) nach einem der Ansprüche 1 bis 3, wobei die Vorrichtung (1) mindestens einen Antrieb, insbesondere mindestens einen zylindrischen Antrieb (59), zum Bewegen des Reservoirs (7) aufweist, insbesondere wobei der mindestens eine Antrieb und das Reservoir (7) durch mindestens einen Hebel (65, 69) gekoppelt sind, insbesondere wobei der mindestens eine Antrieb mit mindestens einem Antriebshebel (65) und das Reservoir (7) mit mindestens einem Reservoirhebel (69) gekoppelt sind, insbesondere wobei der mindestens eine Antriebshebel (65) und der mindestens eine Reservoirhebel (69) durch eine Stange (67) miteinander gekoppelt sind.

5. Vorrichtung (1) nach einem der vorangehenden Ansprüche, ferner umfassend:
- eine Wiederaufbereitungsvorrichtung (91), insbesondere eine Kühlvorrichtung (91), für die Flüssigkeit; und
- einen Flüssigkeitskreislauf (89) zum Leiten der Flüssigkeit aus dem Reservoir (7) durch die Wiederaufbereitungseinrichtung (91) insbesondere direkt zurück zum Reservoir (7) und/oder zu einer Sprüheinrichtung (27) zum Aufbringen der Flüssigkeit auf den Riemen (5).

6. Vorrichtung (1) nach einem der vorhergehenden Ansprüche, ferner umfassend einen Drucksensor (101) zur Messung des hydrostatischen Drucks in dem Reservoir (7), insbesondere wobei der Drucksensor (101) im Wesentlichen am Boden (73) des Reservoirs (7) angeordnet ist, und/oder einen Temperatursensor (103) zur Messung der Temperatur der Flüssigkeit in dem Reservoir (7).

7. Vorrichtung (1) nach einem der vorhergehenden Ansprüche, ferner umfassend eine Versorgungsleitung (105) zur Versorgung des Reservoirs (7) und/oder einer Sprühvorrichtung (27) mit Flüssigkeit und/oder ein Ablassventil (29) zum Ablassen von Flüssigkeit aus dem Reservoir (7).

8. Vorrichtung (1) nach einem der vorhergehenden Ansprüche, umfassend eine Heiztrommel (9), an der der Riemen (5), insbesondere die Außenseite (17) des Riemens (5), entlanggeführt ist, um die Gewebebahn (3) zwischen dem Riemen (5) und der Heiztrommel (9) zu erwärmen, insbesondere ferner umfassend zwei am Riemen (5) gelagerte Drucktrommeln (11, 13), die in Laufrichtung der Heiztrommel (9) nach oben und unten verlaufen, um den Riemen (5) gegen die Heiztrommel (9) zu drängen.

9. Verfahren zur Wartung einer Vorrichtung (1) zum Schrumpfen einer Gewebebahn (3), insbesondere einer Jeansstoffbahn, umfassend die Schritte:
- Bewegen eines Reservoirs (7) aus einer Arbeitsposition, in der das Reservoir (7) zum Sammeln einer Flüssigkeit und/oder zum Kühlen eines Riemens (5) der Vorrichtung (1) verwendet wird, weg von dem Riemen (5) in eine Wartungsposition, und
- Bewegen wenigstens einer Drucktrommel (11, 13) der Vorrichtung (1) aus einer Druckposition, in der die wenigstens eine Drucktrommel (11, 13) den Riemen (5) gegen eine Heiztrommel (9) drängt, in Richtung der Arbeitsposition des Reservoirs (7) in eine Loseposition, in der sich der Riemen (5) in einem ungedehnten Zustand befindet.

## Revendications

1. Dispositif (1) de rétraction d'une bande de tissu (3), en particulier une bande de denim, comprenant :
- une courroie (5) pour convoyer la bande de tissu (3) à travers le dispositif ;
- un tambour chauffant (9) ;
- au moins un tambour de pression (11, 13) ; et
- un réservoir (7) pour collecter un liquide qui est appliqué sur la courroie (5), le réservoir (7) étant monté de manière mobile par le fait qu'il peut être déplacé depuis une position fonctionnelle dans laquelle le réservoir (7) est utilisé pour collecter le liquide et/ou refroidir la courroie (5) depuis la courroie (5) jusque dans une position d'entretien, **caractérisé en ce que**
l'au moins un tambour de pression (11, 13) peut être déplacé depuis une position de poussée dans laquelle l'au moins un tambour de pression (11, 13) pousse la courroie (5) contre le tambour chauffant (9) vers la position fonctionnelle du réservoir (7) jusqu'à une position lâche dans laquelle la courroie (5) est dans un état non étiré.

2. Dispositif (1) selon la revendication 1, dans lequel le réservoir (7) est monté de manière mobile par le fait qu'il peut être déplacé depuis et vers la courroie (5), en particulier par le fait qu'il peut être déplacé depuis une position fonctionnelle pour collecter le liquide, en particulier par le fait que la courroie (5) plonge dans le liquide, depuis la courroie (5) jusque dans une position d'entretien, en particulier dans laquelle la courroie (5) ne plonge pas dans le liquide.

3. Dispositif (1) selon la revendication 1 ou 2, dans lequel le réservoir (7) est monté de manière mobile le long d'un guide linéaire (41) et/ou dans le sens de la gravité (G), en particulier par le fait que le réservoir (7) peut être déplacé depuis une position fonctionnelle au-dessus d'une base (51) du dispositif (1) jusqu'à une position d'entretien en dessous de la base (51).

4. Dispositif (1) selon l'une quelconque des revendications 1 à 3, dans lequel le dispositif (1) comprend au moins un pilote, en particulier au moins un pilote cylindrique (59), pour déplacer le réservoir (7), l'au moins un pilote et le réservoir (7) étant en particulier couplés par au moins un levier (65, 69), l'au moins un pilote étant particulier couplé à au moins un levier de pilote (65) et le réservoir (7) étant couplé à au moins un levier de réservoir (69), l'au moins un levier de pilote (65) et l'au moins un levier de réservoir (69) étant en particulier couplés à l'autre par une barre (67).

5. Dispositif (1) selon l'une quelconque des revendications précédentes, comprenant en outre :
- un dispositif de reconditionnement (91), en particulier un dispositif de refroidissement (91), pour le liquide ; et
- un circuit de liquide (89) pour guider le liquide depuis le réservoir (7) à travers le dispositif de conditionnement (91), en particulier directement en retour vers le réservoir (7) et/ou vers un dispositif de pulvérisation (27) pour appliquer le liquide sur la courroie (5).

6. Dispositif (1) selon l'une quelconque des revendications précédentes, comprenant en outre un capteur de pression (101) pour mesurer la pression hydrostatique dans le réservoir (7), le capteur de pression (101) se trouvant en particulier sensiblement au fond (73) du réservoir (7) et/ou un capteur de température (103) pour mesurer la température du liquide dans le réservoir (7).

7. Dispositif (1) selon l'une quelconque des revendications précédentes, comprenant en outre une ligne d'alimentation (105) pour alimenter le réservoir (7) et/ou un dispositif de pulvérisation (27) avec du liquide et/ou une vanne d'échappement (29) pour drainer du liquide hors du réservoir (7).

8. Dispositif (1) selon l'une quelconque des revendications précédentes, comprenant un tambour chauffant (9) le long duquel la courroie (5), en particulier l'extérieur (17) de la courroie (5), est guidé pour chauffer la bande de tissu (3) entre la courroie (5) et le tambour chauffant (9), en particulier comprenant en outre deux tambours de pression (11, 13) montés dans le sens de circulation de la courroie (5) vers le haut et vers le bas du tambour chauffant (9) pour pousser la courroie (5) contre le tambour chauffant (9) .

9. Procédé d'entretien d'un dispositif (1) de rétraction d'une bande de tissu (3), en particulier une bande de denim, comprenant les étapes suivantes :
- déplacement de réservoir (7) d'une position fonctionnelle dans laquelle le réservoir (7) est utilisé pour collecter un liquide et/ou refroidir une courroie (5) du dispositif (1) depuis la courroie (5) jusqu'à une position d'entretien, et
- déplacement d'au moins un tambour de pression (11, 13) du dispositif (1) depuis une position de poussée dans laquelle l'au moins un tambour de pression (11, 13) pousse la courroie (5) contre un tambour chauffant (9) vers la position fonctionnelle du réservoir (7) jusqu'à une position lâche dans laquelle la courroie (5) est dans un état non étiré.
